# EUROPEAN PATENT SPECIFICATION

(11) **EP 2 782 731 B1**
(45) Date of publication and mention of the grant of the patent: **13.01.2016**
(21) Application number: 12787900.5
(22) Date of filing: 30.10.2012
(51) Int. Cl.: B29B 17/00, E01F 8/00, C08J 5/08, E04B 1/76, B32B 5/28, B32B 17/04

(54) **METHOD OF RECYCLING FIBERGLASS FOR THERMAL INSULATION AND/OR SOUND INSULATION, AND USE IN A SOUND BARRIER PANEL**
VERFAHREN ZUR WIEDERVERWERTUNG VON GLASFASERN ZUR WÄRME- UND/ODER SCHALLDÄMMUNG, UND VERWENDUNG IN EINER SCHALLDÄMMUNGSTAFEL
PROCÉDÉ DE RECYCLAGE DE FIBRES DE VERRE POUR L'ISOLATION THERMIQUE ET/OU L'ISOLATION SONORE, ET UTILISATION DANS UN PANNEAU DE BARRIÈRE SONORE

(30) Priority: 22.11.2011 DK 201100918
(43) Date of publication of application: 01.10.2014
(73) Proprietor: Würtzen, Jakob, 2800 Kgs. Lyngby (DK)
(72) Inventor: Würtzen, Jakob, 2800 Kgs. Lyngby (DK)
(74) Representative: Budde Schou A/S
(86) International application number: PCT/IB2012/056020
(87) International publication number: WO 2013/076601

(56) References cited:
- EP-A1- 1 388 611
- WO-A2-2011/116030
- FR-A1- 2 940 165
- JP-A- 6 166 032
- JP-A- 2002 302 914

## Description

### TECHNICAL FIELD

The present invention pertains generally to re-use of fiberglass products, and in particular to a sound barrier panel comprising reused fiberglass products.

### BACKGROUND OF THE INVENTION

Fiberglass and fiber-reinforced materials are generally used for a variety of components and products such as wind turbine blades, ship hulls, building materials, piping, etc. This use of fiberglass is furthermore increasing rapidly. This ever increasing demand for fiberglass products has also become problematic both in consumer and commercial markets due to negative environmental effects. The negative environmental effects arise mainly from the fact that fiberglass is not biodegradable. This implies that waste fiberglass often needs be disposed with at a landfill. Waste fiberglass products are therefore also some of the most expensive waste material to dispose.

Fiberglass and other fiber-reinforced materials have long been difficult to recycle into new and useful products. Some manufacturers of fiberglass goods are, for example, trying to dramatically increase the use of reclaimed fiberglass in the production processes. Some manufacturers have done this by burning the polymers and reclaiming the glass fibers for use in the production of new fiberglass products. These reclaimed glass fibers are however severely weakened by the heat generated during the burning of the polymers, and can therefore only be reused in small amounts in some types of fiberglass products. Furthermore, this method of reusing the glass fibers is economic cally unfavorable for the manufacturer.

In WO 2011/116030 is disclosed a method of reusing waste wind turbine blades made from fiberglass into new solid fiberglass products.

In US 7,913,812 is disclosed a sound barrier panel made from concrete, wherein one of the sides of the concrete panel is covered with a mix of concrete and fiberglass granulate, and in US 7,879,433 is disclosed an acoustical panel comprising a layer of coarse particles.

Despite prior attempts to reuse waste fiberglass, there has been a long felt - and ever increasing - need for an alternative and economically more favorable way of reducing the detrimental environmental effects related to waste fiberglass products.

One attempt to solve this problem is disclosed in WO 00/70147, wherein a method of manufacturing plates from reused fiberglass is disclosed. The fiberglass is shredded into a size of between 25 and 76 mm, and then formed into a plate and a phenol resin is added. Then the excess resin is removed and the plate is dried and cured in an oven. The plates have a density between 0.05 grams per cubic centimeters and 0,19 grams per cubic centimetres. The plates are rolled into a desired thickness, which requires them to have a hard surface.

In JP 2002 302914 is disclosed a sound insulating panel comprising granulated glass fiber waste

### SUMMARY OF THE INVENTION

It is thus an object of the present invention to provide an economically favorable method of reusing waste material comprising fiberglass and/or carbon fibers.

It is a further object of the invention to provide a sound barrier panel comprising mainly waste fiberglass

According to the present invention, the above-mentioned and other objects are fulfilled by a method of recycling fiberglass for thermal insulation and/or sound insulation, the method comprising the steps of
- providing waste material at least in part formed by fiberglass,
   and then
- shredding and/or granulating said waste material into particles having a certain
   average size, wherein said average particle size is between 5 mm and 60 mm, or between 5 mm and 25 mm, and then
- sieving the particles, thereby providing a mixture of particles having different sizes, whereby inevitable dust-particles and smaller debris formed during the shredding are removed, and then
- forming the particles into a coherent mat having a porous self supporting structure by binding the particles together using an adhesive, wherein said mat has a density of between 0.2 g per cubic cm and 0.6 g per cubic cm,
- forming stiffening support elements as a frame around the periphery of the mat.

It is understood that by the wording fiberglass is understood what is also known as so called glass reinforced plastic or glass fiber reinforced plastic. Essentially fiberglass is a fiber reinforced polymer made of a plastic matrix, which is reinforced by fine fibers of glass. Fiberglass is a lightweight, extremely strong, and robust material. Although strength properties are somewhat lower than in carbon fibers and it is less stiff, the material is typically far less brittle, and the raw materials are much less expensive. Its bulk strength and weight properties are also very favorable when compared to metals, and it can be easily formed using molding processes. The plastic matrix may be a thermosetting plastic (most often epoxy, phenolics, polyester or vinyl ester) or thermoplastic.

Furthermore, it is understood that by the wording carbon fibers is understood what is also known as so called carbon-fiber-reinforced polymer or carbon-fiber-reinforced plastic. Carbon fiber is a very strong and light fiber-reinforced polymer which contains carbon fibers. The polymer is most often epoxy, but other polymers, such as polyester, vinyl ester or nylon, are sometimes used. The composite may also contain other fibers such as Kevlar, aluminium, glass fibers as well as carbon fiber.

Other terms used to refer to the material are graphite-reinforced polymer or graphite fiber-reinforced polymer (graphite fiber-reinforced polymer is less common since it clashes with glass-(fiber)-reinforced polymer). In product advertisements it is sometimes referred to simply as graphite fiber, for short.

By shredding and/or granulating said waste material into particles having a certain average size, a form of the material is achieved, which according to scientific investigations has excellent thermal and sound insulating properties. Furthermore, the waste material is transformed into a form where it is easily handled. For example it may be packed compactly for transport to its place of intended use or place of further processing before final use.

For shredding and/or granulating the waste material, a portable shredder and/or granulator may be used, which may be transported to the place wherein the waste material is disposed, whereby shredding granulation can be carried out at the place of disposal of said material and then transported in shredded and/or granulated form to its place of use or place of further processing.

By sieving the particles, whereby inevitable dust-particles and smaller debris formed during the shredding are removed, it is achieved that a more porous mat may be produced and with lees adhesive that otherwise would have to be used - without sieving.

Accordingly, by the invention a renewed use of a material, which otherwise would have to be disposed with in a landfill is achieved. As described more thoroughly in the detailed description, a mat is achieved, which processes excellent sound dampening, and thermal insulating properties.

The mat has a density of between 0.2 g per cubic cm and 0.6 g per cubic cm. Investigations (see the detailed description for more information) have shown that particularly good sound dampening properties and thermal insulation properties are achieved if mats having densities in these ranges are achieved.

The waste material may in an embodiment of the invention be any of the following or parts of any of the following: wind turbine blades or ship hulls or other construction parts.

The waste material may in an embodiment of the invention be divided into pieces of a suitable size before commencing the step of shredding and/or granulating said waste material. This is advantageous if the waste material is provided in pieces of a size which is too large for fitting into a shredder and/or granulator.

In an embodiment of the invention, the method further comprises the step of applying a flame and/or fire retardant substance to the particles. Hereby the particles can be used as parts of building material for buildings, wherein fire regulatives require a certain level of flame and/or fire retardancy of the building materials used.

In an embodiment of the invention, the method further comprises the step of treating the outer surface of the mat with a flame and/or fire retardant substance. Hereby is achieved a mat that may be used as a thermal insulation panel in houses and/or structures, where the fire regulative require usage of fireproof materials.

According to an embodiment of the invention, the flame and/or fire retardant substance may comprise a mix of the following constituents: ammonium phosphate, a source of citrate ion, and a source of benzoate ion. Hereby is achieved non-poisonous and non-hazardous fire and flame retardant particles of said waste material, which therefore also may be used as thermal insulation and/or sound insulation in residential buildings The flame retardant may for example be an embodiment of the flame retardant described in US 7,736,549. Preferably, such particles treated with a flame and/or fire retardant may be used as thermal cavity wall insulation.

In an embodiment of the invention, the flame and/or fire retardant substance comprises Sodium Silicate. Investigations have shown that Sodium Silicate is particularly good in reducing the flammability of the mats according to the invention For more details, see for example the discussion of the flammability tests reported in the detailed description.

The adhesive could for example be based on epoxy, phenolic formaldehyde resin or water soluble polymers.

In an embodiment of the invention, the method further comprises the step of forming the coherent mat by mixing the particles with an elastomeric material, such as polyurethane. Thereby, a good sound and thermal insulating product is achieved, which is much cheaper than using pure polyurethane, which is rather expensive.

In another embodiment of the invention, the method further comprises the step of forming said mat as an aggregate of particles of the above mentioned kind and particles of a second material in order to impart to the mat certain acoustical properties. These certain acoustical properties could for example be attenuation of sound in certain frequency regions. Thus, the amount of and type of said second particles are preferably chosen in dependence of the kind of noise which needs to be attenuated by usage of said mat.

In a preferred embodiment of the invention, the method further comprises the step of forming the mat by arranging the particles in a particular pattern according to size. This arrangement may also be chosen in order to impart to the mat certain acoustical properties.

In a preferred embodiment of the invention, the method further comprises the step of forming a composite panel, by arranging a plurality of mats in a particular pattern, wherein each mat is formed by particles of a particular size and/or material, wherein each mat is attached to a neighboring sheet by an adhesive. Hereby is achieved a practical way of manufacturing larger panels from smaller mats.

In a preferred embodiment of the invention, the method further comprises the step of forming the panel by several layers of said mats.

By using stiffening support elements, a larger mat can be produced and/or a mat having a looser structure can be used, and/or a mat, wherein less adhesive is used in binding the particles together.

In an embodiment of the invention, the support elements are pliable or possess an inherent resilience. Hereby is achieved a mat, which can be bent in order to fit in/on a non-flat mounting place. Furthermore, if such a mat is used in a road, e.g. a highway sound barrier panel, then the resilience and/or pliability of the supporting elements reduces the risk of injury of a driver (or his/her passengers) during a collision with said panel. At the same time the resilience and/or pliability of the supporting elements reduces the risk of severe damage of the mat.

In the invention, the method comprises the step of forming the stiffening support elements as a frame around the periphery of the mat or composite panel. Hereby is achieved a mat, which is easy to handle without risking breaking pieces from the periphery of the mat during handling of it, e.g. during stacking for transport and unloading after transport, as well as handling during mounting of the mat in its intended use position. The frame will further allow a tight assembly of adjacent panels when installed for its intended purpose.

In an embodiment of the invention, the method further comprises the step of attaching a substantially rigid plate to the frame on one of the two sides of the mat or composite panel. Alternatively, the rigid plate may be attached to the mat itself, e g. by using an adhesive. In an embodiment of the first aspect of the invention, the plate covers substantially all of the side of the mat which is bounded by it. The plate is in an embodiment of the first aspect of the invention perforated. This perforation reduces substantially the risk of back scattering of sound from the plate, whereby such an element (mat and plate) may for example be used inside buildings, wherein absorption of sound generated within said building may be of importance, which for example is the case in ceilings. Hence such an element may be used to cover otherwise bare ceilings and/or walls of a room in a building, e.g. a factory building, wherein backscattering noise from machines may be a problem, or in offices, wherein reverberation of talking and/or babble noise may be a problem.

In an embodiment of the invention, the method further comprises the step of attaching a substantially rigid plate to the frame on each of the two sides of the mat or composite panel. Alternatively, a plate is attached to each side of the mat or composite panel, thereby creating a cartridge, e.g. using an adhesive. In an embodiment of the first aspect of the invention, each of the plates covers substantially all of the side of the mat which is bounded by it. For the same reasons as mentioned above at least one of the plates may be perforated. This embodiment may preferably be used as a partition wall in for example an open office environment, and in such a case embodiments wherein both plates are perforated may be advantageous. At least one of said plates may be perforated.

According to a preferred embodiment of the first aspect of the invention, the support elements and/or the plate(s) are made from a material comprising any of the following: fiberglass, glass fiber reinforced plastic or polymer materials. Hereby is achieved a product, which may be completely recycled into another product of the same kind, if damaged, for example in a car collision. The support elements and/or the plate(s) may alternatively be made from a material comprising metal alloys or wood.

In a preferred embodiment of the invention, the method further comprises the step of covering the mat or composite panel with a water-impermeable membrane made from e.g. polymer. Hereby is obtained a product which is especially adapted for outdoor use, for example as a sound barrier. Furthermore, the prevention of entrance of water into the structure of the mat precludes the detrimental effects it would have on the acoustic and thermal insulating properties of said product.

In an embodiment of the invention, the method further comprises the step of embedding the mat or composite panel into a fiberglass or glass fiber reinforced plastic cartridge. Hereby is obtained an element, which is light in weight, compact, easy to handle and mount, and which also can be completely recycled into a new mat according to the method description above.

According to an embodiment, the invention also pertains to the use of a mat or composite panel manufactured according to a method in accordance with any of the above mentioned embodiments, as a sound barrier, e.g. a traffic sound barrier.

According to a further embodiment, the method further comprises the step of forming a traffic sound barrier panel, comprising at least two layers of mats and/or composite panels, wherein the mat and/or composite panels of each layer have different densities. Traffic noise has primarily frequency components in the interval between 500 Hz and 2000 Hz, and investigations performed by the Delta for the applicant, indicate that good sound dampening properties, in the frequency region wherein traffic noise is most prominent, is achieved if two different densities are used of material is used instead of one (These and other test results are reported in the detailed description of the present specification).

According to a further embodiment of the inventive method, the density of one of the layers is in the range from 0.2 g per cubic cm to 0.4 g per cubic cm, and the density of another adjacent layer is in the range from 0.4 g per cubic cm to 0.6 g per cubic cm. Investigations have shown that a particularly good dampening of traffic noise is achieved with such a layered structure, wherein the layers have densities in the above mentioned range.

Preferably, the at least two different densities are in the range from 0.2 g per cubic cm to 0.4 g per cubic cm and 0.6 g per cubic cm to 0.8 g per cubic cm.

According to a further embodiment, the mats in each layer have the same thickness.

According to a further embodiment each layer has a thickness of between 4 cm and 10 cm, preferably between 4 cm and 8 cm

According to a yet a further embodiment, the combined thickness of the all the layers of the traffic sound barrier panel is between 8 cm and 30 cm, preferably between 8 cm and 20 cm, even more preferably between 8 cm and 15 cm.

The above mentioned and further objects are also achieved by a traffic sound barrier which comprises a plurality of insulating panels in accordance with any of the above mentioned embodiments.

### BREIF DESCRIPTION OF THE DRAWINGS

A further understanding of the nature and advantages of the present invention may be realized by reference to the remaining portions of the specification and the drawings. In the following,
- Fig. 1: shows a part of an insulating panel,
- Fig. 2: shows a part of an insulating panel,
- Fig. 3: shows a part of an insulating panel,
- Fig. 4: shows a part of an insulating panel,
- Fig. 5: shows a part of an insulating panel,
- Fig. 6: shows an embodiment of an insulating panel,
- Fig. 7: shows an embodiment of an insulating panel,
- Fig. 8: shows an embodiment of an insulating panel,
- Fig. 9: shows an embodiment of an insulating panel,
- Fig. 10: shows an embodiment of an traffic sound barrier comprising a plurality of insulating panels as described with reference to any of the figures 1 - 9,
- Fig 11: shows sound absorption curves for single mats of various densities, and
- Fig. 12: shows sound absorption curves for combination of mats of various densities and fineness/coarseness in the particle structure.

### DETAILED DESCRIPTION

The present invention will now be described more fully hereinafter with reference to the accompanying drawings.

The invention may however be embodied in different forms and should not be construed as limited to the embodiments set forth herein. Rather, these embodiments are provided so that this disclosure will be thorough and complete, and fully convey the scope of the invention to those skilled in the art. Like reference numerals refer to like elements throughout. Like elements will, thus, not be described in detail with respect to the description of each figure.

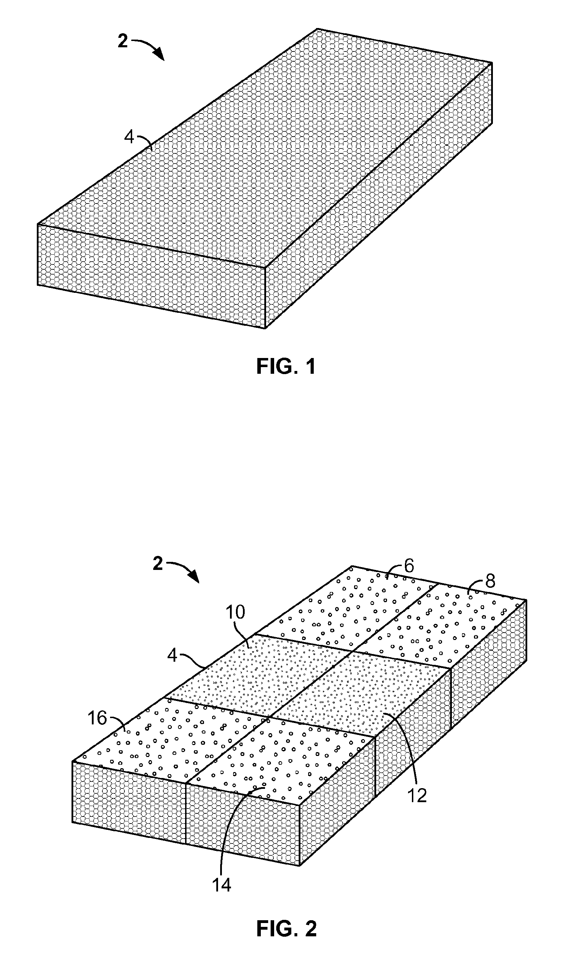

Fig. 1 shows a part of an insulating panel 2 comprising particles of shredded and/or granulated waste material at least in part formed by any of the following constituents: Fiberglass, glass fiber reinforced plastic and carbon fibers. The particles are bonded together by an adhesive as a coherent mat 4 having a porous structure. The illustrated panel 2 has a rectangular shape, but other shapes may be envisioned. In the illustrated insulating panel 2 the particles are bonded together as a self-supporting porous structure. The waste material from which the particles are formed may be wind turbine blades or ship hulls or other construction parts, and the average size of the particles is between 2 mm and 35 mm, preferably between 5 mm and 25 mm.

The coherent mat 4 or the particles itself may have been treated with a flame and/or fire retardant substance. Said flame and/or fire retardant substance comprises a mix of the following constituents: Ammonium phosphate, a source of citrate ion, and a source of benzoate ion. The flame and/or fire retardant substance may be an embodiment of the flame retardant described in US 7,736,549.

The adhesive which is used to bond the particles together may be an elastomeric material, such as polyurethane. The coherent porous mat 4 may further comprise particles of a second material in order to impart to the coherent porous mat certain acoustical properties.

Fig. 2 shows a part of an insulating panel 2, wherein the coherent porous mat 4 is formed from a mixture of particles having different sizes. The mat 4 comprises six different sheets 6, 8, 10, 12, 14, 16 arranged in a pattern. In the illustrated example the sheets 6, 8 and 14, 16 are formed from particles of a size that is larger than the particles from which the sheets 10 and 12 are formed. Alternatively, or in combination with this, the pattern may be formed by sheets 6, 8, 10, 12, 14, 16 comprising particles made from different material, wherein each sheet 6, 8, 10, 12, 14, 16 is attached to a neighboring sheet 6, 8, 10, 12, 14, 16 by an adhesive.

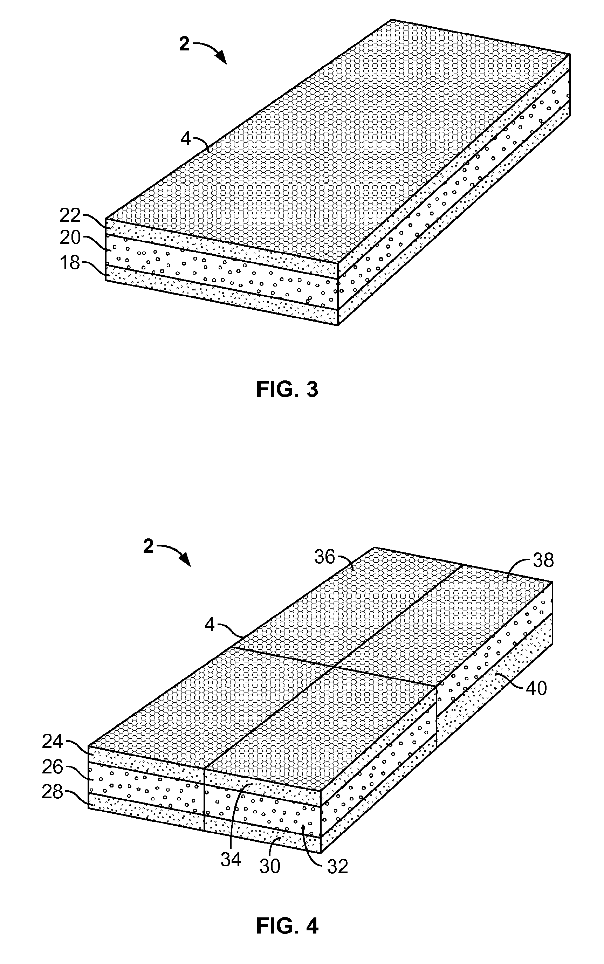

Fig. 3 shows a part of an insulating panel 2, wherein the coherent porous mat 4 is also formed from a mixture of particles having different sizes. In the illustrated embodiment, the insulating panel 2 comprises a coherent porous mat 4, which is formed by several layers of sheets 18, 20, 22. In the illustrated example the sheets 18 and 22 are thinner than the sheet 20. Furthermore, the sheet 20 is formed by particles having a larger average size that the particles from which the sheets 18 and 22 is formed. In an embodiment the individual sheets 18, 20, 22 could also comprise particles made from a different material than at least one of the sheets 18, 20, 22 in the same mat 4.

Fig. 4 shows a part of an alternative insulating panel 2, wherein the coherent porous mat 4 is also formed from a mixture of particles having different sizes. The illustrated mat 4 comprises a plurality of smaller sheets 24, 26, 28, 30, 2, 34, 36, 38, 40 arranged/stacked in a plurality of layers (three and two layers, respectively), each stack of sheets 24, 26, 28, and 30, 32, 34, and 38, 40 being attached to a neighboring stack of sheets 24, 26, 28, 30, 2, 34, 36, 38, 40 in order to form a complete mat 4.

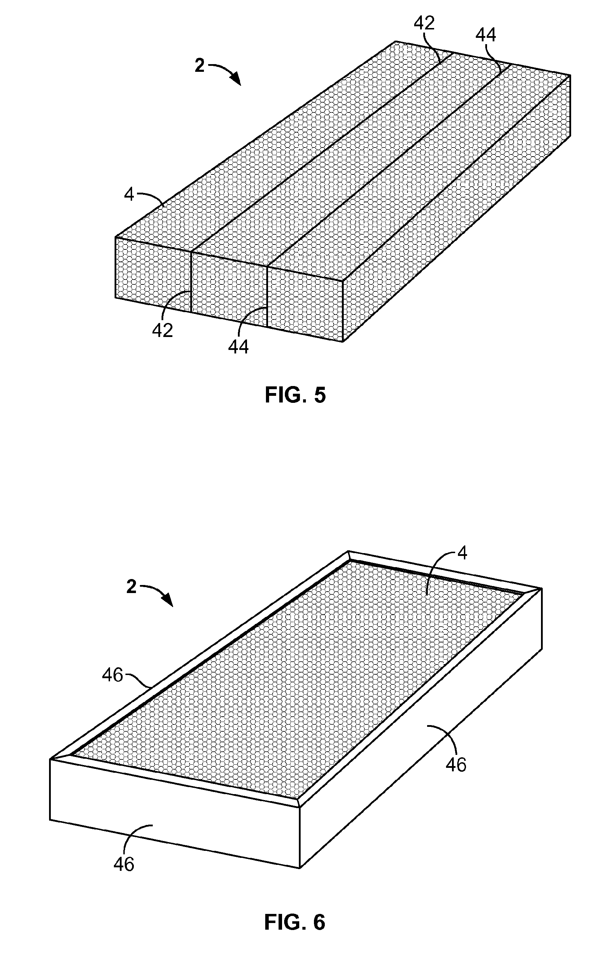

Fig. 5 shows a part of an alternative insulating panel 2, wherein the coherent porous mat 4 further comprises stiffening support elements (braces) 42 and 44 for supporting the coherent porous mat 4. Preferably, the support elements 42, 44 are pliable or possess an inherent resilience. The illustrated mat 4 could in an embodiment be a mat 4 as described in accordance with any of the figures 1 - 4.

Fig. 6 shows an embodiment of an insulating panel 2, wherein the stiffening support elements are formed as a frame 46 around the periphery of the coherent porous mat 4. The mat 4 illustrated in Fig. 6 could in an embodiment be a mat 4 as described in accordance with any of the figures 1 - 5

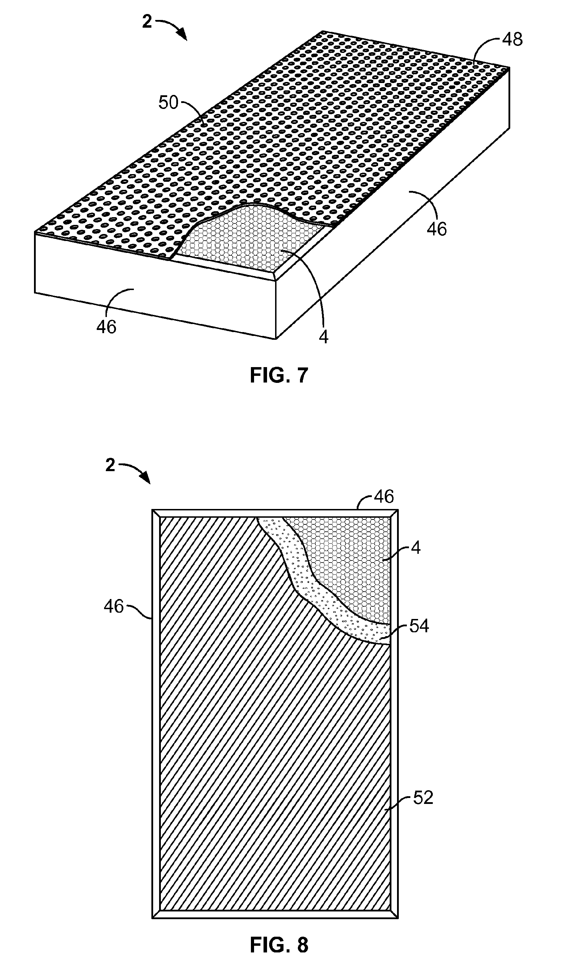

Fig. 7 shows an alternative embodiment of an insulating panel 2, wherein the coherent porous mat 4 further comprises a substantially rigid plate 48, which is connected to the frame 46 on one of the two sides of the coherent porous mat 4. In the illustrated embodiment the plate 48 covers substantially all of the side of the coherent porous mat 4, which is bounded by it The plate could for example be made from wood. The plate 48 comprises a plurality of perforations 50 in order to enhance the sound dampening effect of the panel 2. In a preferred embodiment of the illustrated panel 2, there could also be a similar plate attached to the other side of the mat 4. At least one, but preferably both of said plates are perforated as illustrated. Such an insulating panel 2 could advantageously be used in partition walls in open office environments, in which case the plates could be chosen to be decorative wood plates.

Alternatively, and especially if the insulating panel 2 is for outdoor use, then herein the plate(s) may be made from a material comprising any of the following: Fiberglass, glass fiber reinforced plastic or polymer materials. The support elements described above may also be made from a material comprising any of the following: Fiberglass, glass fiber reinforced plastic or polymer materials.

Fig. 8 shows an alternative embodiment of an insulating panel 2, wherein the coherent porous mat 4 is covered with a front cover 52, made from e.g. polymer or fiberglass. Between the mat 4 and the front cover 52 there is (optionally) placed a water impermeable membrane 54. This water impermeable membrane 54 is preferably made from a polymer(s). The front cover 52 is preferably replaceable, so that it can be replaced with a new one in case of damage e.g. to vandalism such as graffiti paintings.

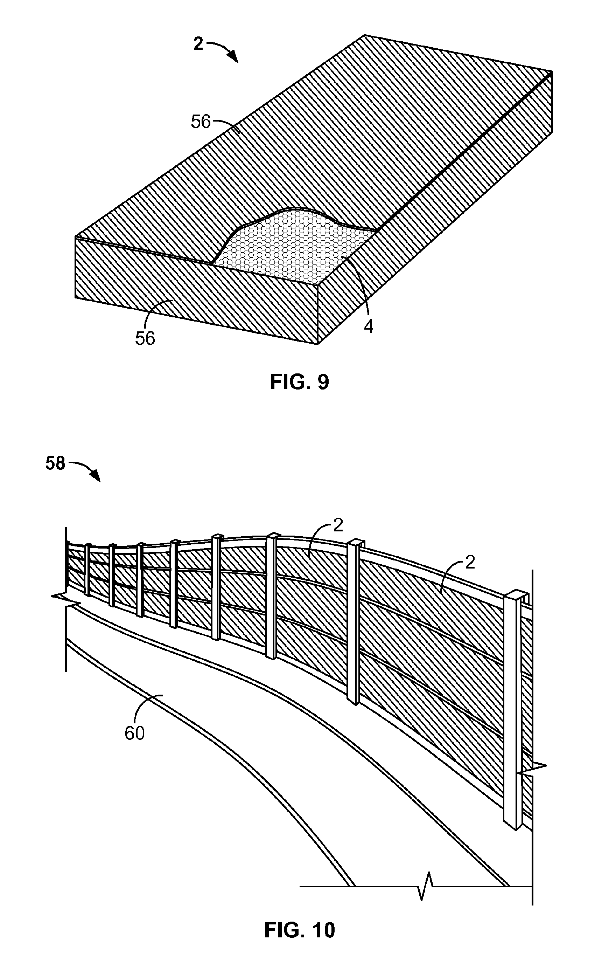

Fig. 9 shows an embodiment of an insulating panel 2, wherein the mat 4 is embedded in a cartridge 56, being formed by fiberglass or glass fiber reinforced plastic. An insulating panel 2 of this kind will be extremely weatherproof and could advantageously be used in a traffic sound barrier e.g. along a road, such as a highway. A further advantage of such an insulating panel is that, in case of un-repairable damage for example due to a car collision, the damaged panel could be shredded and/or granulated as described above and reused for manufacturing new panels of the same kind.

Fig. 10 shows a traffic sound barrier 58 next to a road 60, wherein said traffic sound barrier 58 comprises a plurality of insulating panels 2 as described above in with reference to any of the figures 1 - 9.

### TEST RESULTS

A variety of tests have been performed on samples of mats manufactured according the invention. These tests include, sound dampening properties, thermal insulation properties, mechanical strength tests, water and moisture absorbance properties, and flammability tests These tests and the achieved results are described below, and wherever possible reference is made to known ISO standards for performing said tests.

### Sound dampening properties

The sound dampening properties of the material is tested in a so called absorption tube with perpendicular sound incidence The measurements were conducted in accordance with the standard DS/EN ISO 10534-2. The dimensions of the tube has the effect that only the frequency region between 50 Hz and 2000 Hz can be tested. However, since traffic noise primarily has frequency components in the region between 500 Hz and 2000 Hz, the measurements would give a fairly good indication of how good traffic noise is dampened.

The measurements were conducted with a frequency resolution of 2 Hz in the frequency region 50 Hz - 2000 Hz, and the absorption coefficient determined was recalculated into 1/3 octave levels. The test samples were divided into 4 categories:
FL denoting samples made from fine particles, said samples having a diameter of 90 mm and thickness of 50 mm and density of 0.19 g per cubic cm.
FT denoting samples made from fine particles, said samples having a diameter of 90 mm and thickness of 50 mm and density of 0.37 g per cubic cm.
GL denoting samples made from coarse particles, said samples having a diameter of 90 mm and thickness of 50 mm and density of 0.19 g per cubic cm.
GT denoting samples made from coarse particles, said samples having a diameter of 90 mm and thickness of 50 mm and density of 0.40 g per cubic cm.

These were compared to measurements made on Rockwool (MU) samples having a diameter of 90 mm and thickness of 50 mm.

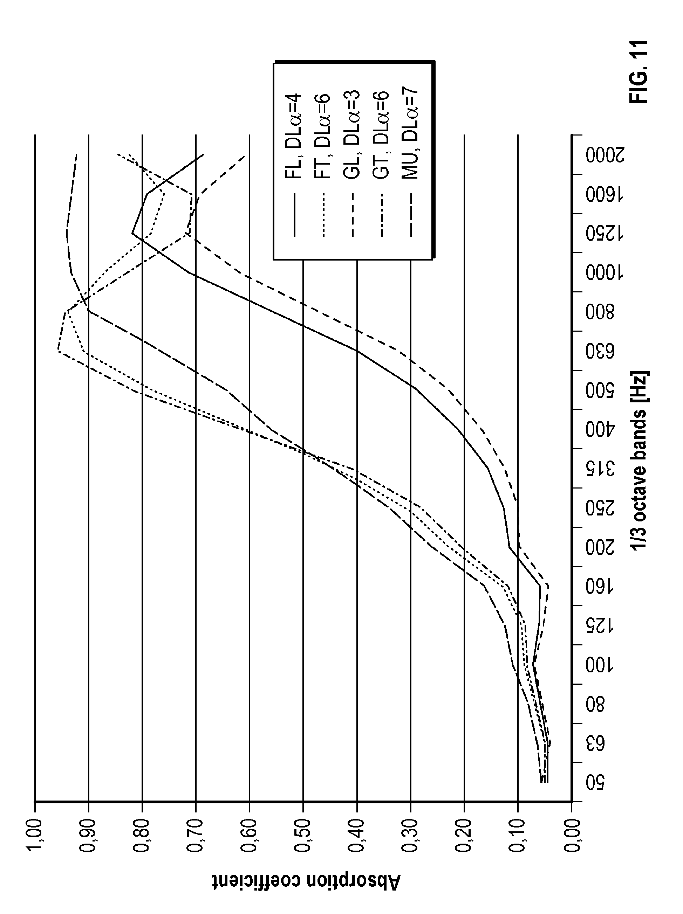

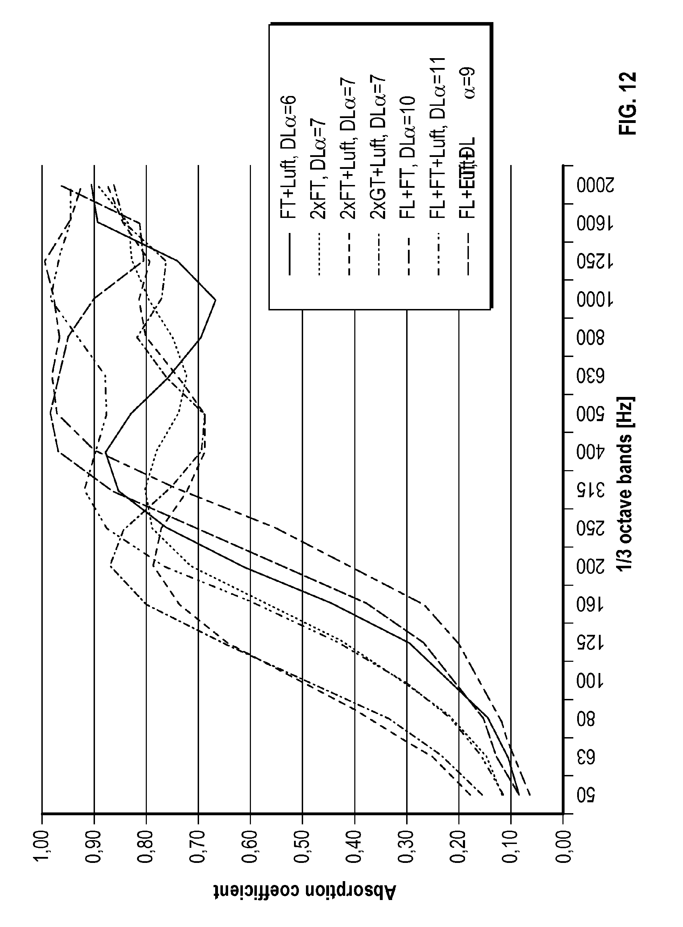

In table 1 below and Fig. 11 is shown the results for single samples, and in table 2 and Fig. 12 is shown results for combinations of samples. The calculations of the acoustical dampening are based on the standard for determining the dampening of traffic noise (DS/EN 1793-1:1997).

**Table 1: Showing calculated mean values at center frequencies for 1/3 octaves from 50 Hz to 2000 Hz, and categorized in accordance with the standard DS/EN 1793:1997**

| **Frequency Hz** | **FL** | **FT** | **GL** | **GT** | **MU** |
|---|---|---|---|---|---|
| 50 | 0.04 | 0.06 | 0.06 | 0.05 | 0.06 |
| 63 | 0.05 | 0.05 | 0.04 | 0.05 | 0.06 |
| 80 | 0.06 | 0.07 | 0.05 | 0.06 | 0.08 |
| 100 | 0.07 | 0.09 | 0.07 | 0.08 | 0.11 |
| 125 | 0.06 | 0.09 | 0.05 | 0.09 | 0.12 |
| 160 | 0.06 | 0.13 | 0.04 | 0.12 | 0.16 |
| 200 | 0.12 | 0.23 | 0.10 | 0.21 | 0.26 |
| 250 | 0.13 | 0.31 | 0.10 | 0.28 | 0.34 |
| 315 | 0.16 | 0.43 | 0.12 | 0.41 | 0.44 |
| 400 | 0.21 | 0.60 | 0.17 | 0.61 | 0.56 |
| 500 | 0.29 | 0.78 | 0.23 | 0.82 | 0.64 |
| 630 | 040 | 0.91 | 0.32 | 0.96 | 0.76 |
| 800 | 0.56 | 0.94 | 0.47 | 0.94 | 0.90 |
| 1000 | 0.71 | 0.87 | 0.62 | 0.82 | 0.93 |
| 1250 | 0.82 | 0.78 | 0.72 | 0.71 | 0.94 |
| 1600 | 0.79 | 0.76 | 0,69 | 0,71 | 0,93 |
| 2000 | 0.69 | 0.82 | 0.61 | 0.84 | 0.92 |
| DLalpha | 4 | 6 | 3 | 6 | 7 |
| Category | A2 | A2 | A2 | A2 | A2 |

**Table 2: Showing calculated mean values at the center frequencies for 1/3 octaves from 50 Hz to 2000 Hz, and categorized in accordance with the standard DS/EN 1793:1997. Here "air" means a 50 mm air gap.**

| **Frequency Hz** | **FL+air** | **2xFT** | **2xFT+ air** | **2xGT+ air** | **FL+FT** | **FL+FT + air** | **FL+air+FT** |
|---|---|---|---|---|---|---|---|
| 50 | 0.08 | 0.12 | 0.18 | 0.16 | 0.06 | 0.11 | 0.08 |
| 63 | 0.11 | 0.15 | 0.25 | 0.23 | 0.10 | 0.16 | 0.13 |
| 80 | 0.14 | 0.21 | 0.37 | 0.33 | 0.12 | 0.22 | 0.15 |
| 100 | 0.22 | 0.31 | 0.51 | 0.49 | 0.16 | 0.31 | 0.21 |
| 125 | 0.29 | 0.42 | 0.64 | 0.66 | 0.20 | 0.43 | 0.27 |
| 160 | 0.44 | 0.57 | 0.74 | 0.80 | 0.27 | 0.59 | 0.37 |
| 200 | 0.61 | 0.71 | 0.79 | 0.87 | 0.41 | 0.77 | 0.53 |
| 250 | 0.76 | 0.79 | 0.77 | 0.84 | 0.55 | 0.88 | 0.70 |
| 315 | 0.85 | 0.80 | 0.72 | 0.76 | 0.74 | 0.92 | 0.87 |
| 400 | 0.88 | 0.78 | 0.69 | 0.69 | 0.90 | 0.90 | 0.97 |
| 500 | 0.83 | 0.74 | 0.69 | 0.69 | 0.97 | 0.88 | 0.98 |
| 630 | 0.76 | 0.72 | 0.74 | 0.76 | 0.98 | 0.88 | 0.97 |
| 800 | 0.70 | 0.75 | 0.80 | 0.82 | 0.97 | 0.93 | 0.95 |
| 1000 | 0.67 | 0.79 | 0.81 | 0.77 | 0.98 | 0.99 | 0.90 |
| 1250 | 0.74 | 0.83 | 0.79 | 0.76 | 1 | 0.97 | 0.81 |
| 1600 | 0.89 | 0.84 | 0.85 | 0.84 | 0.95 | 0.95 | 0.81 |
| 2000 | 0.91 | 0.89 | 0.88 | 0.86 | 0.92 | 0.95 | 0.97 |
| DLalpha | 6 | 7 | 7 | 7 | 10 | 11 | 9 |
| Category | A2 | A2 | A2 | A2 | A3 | A3 | A3 |

According to the guidelines of the Danish Road Directorate, traffic sound barriers must have a classification of at least A3. From the above measurements it is seen that a panel according to the invention comprising mats having two different densities fulfills an A3 classification - thereby making them suitable as traffic sound barriers.

Acoustical tests in a diffuse sound field were also conducted and gives qualitatively similar results to those referred to above, which indicates that the results obtained from the sound tube measurements gives a valid indication of the sound dampening effect of the panels according to the invention.

### Heat conductivity

The heat conductivity of 8 samples of mats according to the invention was conducted. The measurements have been conducted as a series of 6 single measurements with 5 minutes between each measurement using an ISOMET 2104 lambda-measurement equipment. The samples and achieved results are listed in the table below:

| **Sample** | **Density g/cm³** | **Heat conductivity W/mK** | **Spreading W/mK** | **Measurement temperature/degrees Celcius** |
|---|---|---|---|---|
| Coarse | 0.19 | 0.056 | 0.0042 | 27.6 |
| Coarse | 0.19 | 0.055 | 0.0077 | 28.1 |
| Coarse | 0.38 | 0.062 | 0.0059 | 28.4 |
| Coarse | 0.37 | 0.066 | 0.0029 | 29.3 |
| Fine | 0.19 | 0.058 | 0.0023 | 27.6 |
| Fine | 0.19 | 0.059 | 0.0047 | 26.0 |
| Fine | 0.41 | 0.067 | 0.0066 | 26.5 |
| Fine | 0.41 | 0.066 | 0.0038 | 27.1 |

As can be seen from these measurements, the heat conductivity of the mats is roughly 20% higher than for mineral wool, which implies that same insulation properties can be achieved if a roughly 20% thicker mat is used. The production of mineral wool is highly energy demanding, and in the long run it creates a waste disposal problem Since the present invention actually solves a waste disposal problem and provides a product almost as good as mineral wool, gives promising venues for the application of the mats according to the invention as insulation material.

### Mechanical strength

The mechanical strength of the mats has been tested in accordance with the standard testing methods DS/EN 826(1996) for compressibility, and DS/EN 12089(1999) for bending. The results of these tests show that the mats have an average compression stress of between 95(6) kPa and 102(12) kPa at 10% deformation. The numbers in parenthesis is the standard deviation (n-1). The flexural strength was determined to be on average between 230(34) kPa and 284(35) kPa. Also here the numbers in parenthesis is the standard deviation (n-1).

### Water and moisture absorbance

Moisture absorbance was measured by placing test samples in a container having 100% relative humidity during a period of 100 days and periodically weighing the samples.

Water absorbance was tested by immersing test samples in water in a closed container during a period of 100 days and periodically weighing the samples

The results shows a relatively low moisture and water absorbance and that absorbed water and moisture relatively quickly drains from the samples. Furthermore, no mechanical disintegration of the samples was observed at the termination of the period of exposure.

### Flammability

Samples of mats manufactured according to the invention have also been investigated regarding to flammability in accordance with the principles described in DIN 4102 "Brandverhalten von Baustoffen und Bauteilen", classification B2. The test samples were categorized in the following categories:
"Standard" - samples without any surface treatment.
"Burnblock" - samples sprayed with Burnblock flame retardant
"Magma" - samples sprayed with Magma Firestop PM flame retardant
"Water glass" - samples sprayed with Sodium Silicate.

The tests have shown that all samples tested show a rather low flammability. However, holes or other unevenness/ruggedness in the surface structure of the samples had a great influence on the flammability. In all five samples within each category were tested and the results are given in the table below:

| | **Compliance with the DIN 4102 B2 classification** | | | | | | |
|---|---|---|---|---|---|---|---|
| **sample** | **Standard** | **Burnblock** | **Burnblock washed** | **Magma** | **Magma washed** | **Water glass** | **Water glass washed** |
| 1 | No | Yes | | Yes | | Yes | |
| 2 | No | Yes | | Yes | | Yes | |
| 3 | Yes | No | | Yes | | Yes | |
| 4 | No | | No | | No | | Yes |
| 5 | No | | No | | Yes | | Yes |

The results show that surface treatment with Sodium Silicate is particularly efficient in reducing the flammability of the mats according to the invention.

### LIST OF REFERENCE NUMBERS

In the following is given a list of reference numbers that are used in the detailed description of the invention.
- 2: sound barrier panel,
- 4: coherent porous mat,
- 6-40: sheets,
- 42, 44: supporting elements,
- 46: frame,
- 48: substantially rigid plate,
- 50: perforations in the substantially rigid plate,
- 52: front cover,
- 54: water impermeable membrane,
- 56: fiberglass cartridge,
- 58: traffic sound barrier, and
- 60: road.

## Claims

1. A method of recycling fiberglass for thermal insulation and/or sound insulation, the method comprising the steps of
- providing waste material at least in part formed by fiberglass,
and then
- shredding and/or granulating said waste material into particles having a certain average size, wherein said average particle size is between 5 mm and 60 mm, or between 5 mm and 25 mm, and then
- sieving the particles, thereby providing a mixture of particles having different sizes, whereby inevitable dust-particles and smaller debris formed during the shredding are removed, and then
- forming the particles into a coherent mat (4) having a porous self supporting structure by
binding the particles together using an adhesive, wherein said mat has a density of between 0.2 g per cubic cm and 0.6 g per cubic cm,
- forming stiffening support elements as a frame (46) around the periphery of the mat

2. A method according to claim 1, further comprising the step of applying a flame and/or fire retardant substance to the particles, and/or the step of treating the outer surface of the mat with a flame and/or fire retardant substance.

3. A method according to claim 1 or 2, wherein the flame and/or fire retardant substance comprises Sodium silicate.

4. A method according to claim 2, wherein the flame and/or fire retardant substance comprises a mix of the following constituents: ammonium phosphate, a source of citrate ion, and a source of benzoate ion.

5. A method according to any of the claims 1 - 4, further comprising the step of equipping the mat(s) and/or composite panel with stiffening support elements, e.g. braces.

6. A method according to claim 1, further comprising the step of attaching a substantially rigid plate (48)
to the frame on one of the two sides of the mat or composite panel.

7. A method according to claim 6, wherein the plate covers substantially all of the side of the mat or composite panel which is bounded by it.

8. A method according to claim 6 or 7, wherein the plate is perforated.

9. A method according to claim 1, further comprising the step of attaching a substantially rigid plate to the frame on each of the two sides of the mat or composite panel.

10. A method according to claim 9, wherein each of the plates covers substantially all of the side of the mat or composite panel which is bounded by it, thereby forming a cartridge for the mat or composite panel.

11. A method according to claim 9 or 10, wherein at least one of the plates are perforated.

12. A method according to any of the claims 5 - 11, wherein the support elements and/or the plate(s) are made from a material comprising any of the following: fiberglass, glass fiber reinforced plastic or polymer materials.

13. A method according to any of the claims 1 - 12, further comprising the steps of covering the mat or composite panel with a water-impermeable membrane (54), made from e.g. polymer or a woven glass fiber dew.

14. A method according to any of the claims 1 - 5, further comprising the step of embedding the mat or composite panel into a fiberglass or glass fiber reinforced plastic cartridge.

15. Use of a mat or composite panel manufactured according to a method in accord ance with any of the claims 1 - 14 as a sound barrier, e.g. a traffic sound barrier (58).

## Patentansprüche

1. Verfahren zur Wiederverwertung von Glasfasern zur Wärme- und/oder Schalldämmung, wobei das Verfahren die folgenden Schritte umfasst
- Bereitstellen von Abfallmaterial mindestens teilweise aus Glasfaser bestehend, und danach
- Zerkleinern und/oder Granulieren des Abfallmaterials in Partikel mit einer gewissen durchschnittlichen Größe, wobei die durchschnittliche Partikelgröße zwischen 5 mm und 60 mm oder zwischen 5 mm und 25 mm liegt, und danach
- Sieben der Partikel, wodurch eine Mischung aus Partikeln mit verschiedenen Größen bereitgestellt wird, wodurch unvermeidliche Staubpartikel und kleinere Abfälle, die während der Zerkleinerung gebildet sind, beseitigt werden, und danach
- Formen der Partikel zu einer kohärenten Matte (4) mit einer porösen selbsttragenden Konstruktion durch Zusammenbinden der Partikel unter Verwendung eines Klebstoffes, wobei die Matte eine Dichte von zwischen 0,2 Gramm pro Kubikzentimeter und 0,6 Gramm pro Kubikzentimeter aufweist,
- Bilden von versteifenden Trägerelementen als einem Rahmen (46) um den Umfang der Matte herum.

2. Verfahren nach Anspruch 1, ferner umfassend den Schritt des Aufbringens einer flamm- und/oder brandhemmenden Substanz auf die Partikeln und/oder den Schritt des Behandelns der Außenfläche der Matte mit einer flamm- und/oder brandhemmenden Substanz.

3. Verfahren nach Anspruch 1 oder 2, wobei die flamm- und/oder brandhemmende Substanz Natriumsilikat umfasst.

4. Verfahren nach Anspruch 2, wobei die flamm- und/oder brandhemmende Substanz eine Mischung aus der folgenden Bestandteile umfasst: Ammoniumphosphat, eine Quelle für Citration und eine Quelle für Benzoation.

5. Verfahren nach einem der Ansprüche 1 - 4, ferner umfassend den Schritt des Ausrüstens der Matte(n) und/oder Verbundplatte mit versteifenden Trägerelementen, z.B. Stützen.

6. Verfahren nach Anspruch 1, ferner umfassend den Schritt des Befestigens einer im Wesentlichen starren Platte (48) an dem Rahmen auf einer der beiden Seiten der Matte oder Verbundplatte.

7. Verfahren nach Anspruch 6, wobei die Platte im Wesentlichen die ganze Seite der Matte oder Verbundplatte abdeckt, die von dieser begrenzt ist.

8. Verfahren nach Anspruch 6 oder 7, wobei die Platte perforiert ist.

9. Verfahren nach Anspruch 1, ferner umfassend den Schritt des Befestigens einer im Wesentlichen starren Platte an dem Rahmen auf jeder der beiden Seiten der Matte oder Verbundplatte.

10. Verfahren nach Anspruch 9, wobei jede der Platten im Wesentlichen die ganze Seite der Matte oder Verbundplatte abdeckt, die von dieser begrenzt ist, wodurch eine Kartusche für die Matte oder Verbundplatte gebildet wird.

11. Verfahren nach Anspruch 9 oder 10, wobei mindestens eine der Platten perforiert ist.

12. Verfahren nach einem der Ansprüche 5 - 11, wobei die Trägerelemente und/oder die Platte(n) aus einem Material hergestellt sind, das eines der folgenden Materialien umfasst: Glasfasern, glasfaserverstärktes Kunststoff oder polymere Materialien.

13. Verfahren nach einem der Ansprüche 1 - 12, ferner umfassend die Schritte des Abdeckens der Matte oder Verbundplatte mit einer wasserundurchlässigen Membran (54), die aus z.B. Polymer oder einem gewobenen Glasfasertuch hergestellt ist.

14. Verfahren nach einem der Ansprüche 1 - 5, ferner umfassend den Schritt des Einbettens der Matte oder Verbundplatte in eine glasfaser- oder glasfaserverstärkte Kunststoffkartusche.

15. Verwendung einer Matte oder Verbundplatte, die nach einem Verfahren nach einem der Ansprüche 1 - 14 als eine Schalldämmung, z.B. eine Verkehrsschalldämmung (58) hergestellt ist.

## Revendications

1. Procédé de recyclage de fibres de verre pour l'isolation thermique et/ou l'isolation sonore, le procédé comprenant les étapes de
- fournir des déchets au moins en partie constitués par des fibres de verre, et ensuite
- broyer et/ou concasser lesdits déchets en particules ayant une certaine taille moyenne, où ladite taille moyenne des particules se situe entre 5 mm et 60 mm, ou entre 5 mm et 25 mm, et ensuite
- tamiser les particules, fournissant ainsi un mélange de particules ayant des tailles différentes, par quel moyen des particules de poussières inévitables et des moindres débris formés pendant le broyage sont enlevés, et ensuite
- former les particules en une natte cohérente (4) ayant une structure autoporteuse poreuse en reliant les particules utilisant un adhésif, où ladite natte a une densité d'entre 0,2 g par centimètre cube et 0,6 g par centimètre cube,
- former des éléments de support raidissant comme un cadre (46) autour de la périphérie de la natte.

2. Procédé selon la revendication 1, comprenant en outre l'étape d'appliquer une flamme et/ou un agent ignifuge aux particules, et/ou l'étape de traiter la surface extérieure de la natte avec une flamme et/ou un agent ignifuge.

3. Procédé selon l'une des revendications 1 ou 2, dans lequel la flamme et/ou l'agent ignifuge comprend du silicate de sodium.

4. Procédé selon la revendication 2, dans lequel la flamme et/ou l'agent ignifuge comprend un mélange des constituants suivants : du phosphate d'ammonium, une source d'ion citrate, et une source d'ion benzoate.

5. Procédé selon l'une quelconques des revendications 1 à 4, comprenant en outre l'étape d'équiper la/les natte(s) et/ou le panneau composite avec des éléments de support raidissant, par exemple des entretoises.

6. Procédé selon la revendication 1, comprenant en outre l'étape de fixer une plaque essentiellement rigide (48) au cadre sur l'un des deux côtés de la natte ou du panneau composite.

7. Procédé selon la revendication 6, dans lequel la plaque couvre essentiellement tout le côté de la natte ou du panneau composite qui est délimité par celle-ci.

8. Procédé selon l'une des revendications 6 ou 7, dans lequel la plaque est perforée.

9. Procédé selon la revendication 1, comprenant en outre l'étape de fixer une plaque essentiellement rigide au cadre sur chacun des deux côtés de la natte ou du panneau composite.

10. Procédé selon la revendication 9, dans lequel chacune des plaques couvre essentiellement tout le côté de la natte ou du panneau composite qui est délimité par celle-ci, formant ainsi une cartouche pour la natte ou le panneau composite.

11. Procédé selon l'une des revendications 9 ou 10, dans lequel au moins l'une des plaques est perforée.

12. Procédé selon l'une quelconque des revendications 5 à 11, dans lequel les éléments de support et/ou la/les plaque(s) sont faits d'une matière comprenant l'un quelconque des constituants suivants: du plastique renforcé en fibres de verre ou de matériaux polymères.

13. Procédé selon l'une quelconque des revendications 1 à 12, comprenant en outre les étapes de couvrir la natte ou le panneau composite avec une membrane (54) imperméable à l'eau faite à partir de par exemple de polymère ou de tissus de fibres de verre.

14. Procédé selon l'une quelconque des revendications 1 à 5, comprenant en outre l'étape d'incorporer la natte ou le panneau composite dans une cartouche en fibre de verre ou une cartouche en plastique renforcée en fibre de verre.

15. Utilisation d'une natte ou d'un panneau composite fait selon un procédé selon l'une quelconque des revendications 1 à 14 comme une barrière du son, par exemple une barrière du son de circulation.
